# EUROPEAN PATENT APPLICATION

(11) **EP 4 086 780 A1**
(43) Date of publication of application: **09.11.2022**
(21) Application number: 20918744.2
(22) Date of filing: 29.10.2020
(51) Int. Cl.: G06F 16/176

(54) **FILE SHARING METHOD AND SYSTEM, AND RELATED DEVICE**

(30) Priority: 12.02.2020 CN 202010089391
(71) Applicant: Petal Cloud Technology Co., Ltd., Dongguan, Guangdong 523799 (CN)
(72) Inventor: DU, Dongdong, Shenzhen, Guangdong 518129 (CN); LI, Xuefeng, Shenzhen, Guangdong 518129 (CN)
(74) Representative: Thun, Clemens
(86) International application number: PCT/CN2020/124761
(87) International publication number: WO 2021/159746

(57) **Abstract**

A file sharing method, a system, and a related device are provided, which are applicable to the field of internet technologies. The file sharing method includes: After detecting a sharing operation instruction of an original file, a terminal device obtains a cloud identifier corresponding to the original file (S101); the terminal device obtains, from the cloud disk server, the original file corresponding to the cloud identifier (S102); and the terminal device sends the obtained original file corresponding to the cloud identifier to a target sharing terminal (S103), so that sharing of a file stored in the cloud disk server can be implemented without jumping by using an address link.

## Description

This application claims priority to Chinese Patent Application No. 202010089391.4, filed with the National Intellectual Property Administration on February 12, 2020 and entitled "FILE SHARING METHOD, SYSTEM, AND RELATED DEVICE", which is incorporated herein by reference in its entirety.

### TECHNICAL FIELD

This application relates to the field of internet technologies, and in particular, to a file sharing method, a system, and a related device.

### BACKGROUND

With continuous development of a mobile terminal and a mobile network, improved pixels of a camera make storage space for taking a photo increasingly larger, and more people choose to synchronize a photo taken on a mobile terminal to a cloud disk server. For an image synchronized to the cloud disk server, in an existing sharing method, an address link of an original image in the cloud disk server is generally sent to a third-party server by using a cloud disk client, and another terminal device needs to download a to-be-shared file from the cloud disk server based on the address link sent by the third-party server. The address link cannot be directly displayed, and a third-party application needs to adapt to the address link, which affects user experience.

### SUMMARY

Embodiments of this application provide a file sharing method, a system, and a related device, so that a to-be-shared original file can be directly obtained, and a third-party application does not need to adapt to an address link.

According to a first aspect, an embodiment of this application provides a file sharing method, applied to a terminal device. The file sharing method includes:
if a sharing operation instruction of an original file is detected, obtaining a cloud identifier corresponding to the original file, where one cloud identifier corresponds to at least one original file stored in a cloud disk server;
obtaining, from the cloud disk server, the original file corresponding to the cloud identifier; and
sending the obtained original file corresponding to the cloud identifier to a target sharing terminal.

In the foregoing embodiment, cloud identifiers are associated with original files stored in the cloud disk server one by one. When detecting the sharing operation instruction of the original file, the terminal device obtains the corresponding cloud identifier, sends the cloud identifier to the cloud disk server, to obtain the original file that is sent by the cloud disk server and that corresponds to the cloud identifier, and then sends the original file to the target sharing terminal, to implement sharing of a file stored in the cloud disk server. Because the file received by the target sharing terminal is an original file, jumping does not need to be performed by using an address link, so that a third-party application on the target sharing terminal does not need to adapt to the address link, universality is better, and user experience is improved.

In a possible implementation of the first aspect, the obtaining a cloud identifier corresponding to the original file includes:
searching a media metadata table of a media library of the terminal device for the cloud identifier corresponding to the original file; and if the cloud identifier corresponding to the original file exists in the media metadata table, obtaining the cloud identifier corresponding to the original file. For example, the media metadata table includes a cloud identifier field. If the cloud identifier field in a storage record corresponding to the original file is not empty, the cloud identifier is obtained.

In a possible implementation of the first aspect, a media image management interface on the terminal device is configured to manage files stored in the terminal device and the cloud disk server. The terminal device implements, through the media image management interface, a read/write operation on the file stored in the cloud disk server. The searching a media metadata table of a media library of the terminal device for the cloud identifier corresponding to the original file includes: searching, by using a preset media image management interface, the media metadata table of the media library of the terminal device for the cloud identifier corresponding to the original file.

The obtaining, from the cloud disk server, the original file corresponding to the cloud identifier includes: obtaining, from the cloud disk server by using the preset media image management interface, the original file corresponding to the cloud identifier.

In a possible implementation of the first aspect, if the original file does not exist on the terminal device, the media metadata table of the media library of the terminal device is searched for the cloud identifier corresponding to the original file.

In a possible implementation of the first aspect, before the obtaining a cloud identifier corresponding to the original file, the method further includes:
obtaining the original file; uploading the original file to the cloud disk server by using a cloud disk client, where the cloud disk client is installed on the terminal device; and receiving the cloud identifier that is sent by the cloud disk server and that corresponds to the original file. Because the cloud identifier stored in the terminal device is in a one-to-one correspondence with the original file on the cloud disk server, the cloud disk server may send the corresponding original file to the terminal device based on the cloud identifier sent by the terminal device.

In a possible implementation of the first aspect, after the uploading the original file to the cloud disk server by using a cloud disk client, the method further includes:
deleting the original file on the terminal device, and obtaining, from the cloud disk server, a compressed file corresponding to the deleted original file. This helps save storage space on the terminal device; and the user may preview the original file by using the compressed file on the terminal device at the same time, thereby improving user experience.

According to a second aspect, an embodiment of this application provides a file sharing method, applied to a cloud disk server. The file sharing method includes:
when receiving a cloud identifier that is sent by a terminal device and corresponds to an original file, obtaining the original file corresponding to the cloud identifier, where the cloud identifier is triggered after the terminal device detects a sharing operation instruction of the original file, and one cloud identifier corresponds to at least one original file stored in the cloud disk server; and
sending the original file corresponding to the cloud identifier to the terminal device, to trigger an operation that the terminal device sends the original file corresponding to the cloud identifier to a target sharing terminal.

In a possible implementation of the second aspect, before the obtaining the original file corresponding to the cloud identifier, the method further includes:
obtaining the original file uploaded by the terminal device by using a cloud disk client; and
generating the cloud identifier corresponding to the original file, and sending the cloud identifier corresponding to the original file to the terminal device.

In a possible implementation of the second aspect, after the generating the cloud identifier corresponding to the original file, the method further includes:
generating an address link corresponding to the cloud identifier.

Correspondingly, the sending the original file corresponding to the cloud identifier to the terminal device includes: obtaining the corresponding original file based on the address link corresponding to the cloud identifier, and sending the original file to the terminal device.

In a possible implementation of the second aspect, after the generating the cloud identifier corresponding to the original file, the method further includes:
generating a compressed file corresponding to the original file.

According to a third aspect, an embodiment of this application provides a terminal device, including a memory, a processor, and a computer program that is stored in the memory and that can be run on the processor. When executing the computer program, the processor implements the file sharing method according to the first aspect.

According to a fourth aspect, an embodiment of this application provides a cloud disk server, including a memory, a processor, and a computer program that is stored in the memory and that can be run on the processor. When the processor executes the computer program, the file sharing method according to the second aspect is implemented.

According to a fifth aspect, an embodiment of this application provides a file sharing system, including the terminal device according to the third aspect and the cloud disk server according to the fourth aspect.

According to a sixth aspect, an embodiment of this application provides a file sharing apparatus, including a terminal device and a cloud disk server. The terminal device includes:
a first obtaining module, configured to: if a sharing operation instruction of an original file is detected, obtain a cloud identifier corresponding to the original file, where one cloud identifier corresponds to one original file stored in a cloud disk server;
a second obtaining module, configured to obtain, from the cloud disk server, the original file corresponding to the cloud identifier; and
a first sending module, configured to send the obtained original file corresponding to the cloud identifier to a target sharing terminal.

In a possible implementation of the sixth aspect, the first obtaining module includes a searching unit and an obtaining unit.

The searching unit is configured to search a media metadata table of a media library of the terminal device for the cloud identifier corresponding to the original file.

The obtaining unit is configured to: if the cloud identifier corresponding to the original file exists in the media metadata table, obtain the cloud identifier corresponding to the original file.

In a possible implementation of the sixth aspect, the searching unit is specifically configured to search, by using a preset media image management interface, the media metadata table of the media library of the terminal device for the cloud identifier corresponding to the original file.

In a possible implementation of the sixth aspect, the second obtaining module is specifically configured to:
obtaining, from the cloud disk server by using the preset media image management interface, the original file corresponding to the cloud identifier.

In a possible implementation of the sixth aspect, the searching unit is further configured to: if the original file does not exist on the terminal device, search the media metadata table of the media library of the terminal device for the cloud identifier corresponding to the original file.

In a possible implementation of the sixth aspect, the terminal device further includes a file uploading module. The file uploading module is configured to:
obtain the original file;
upload the original file to the cloud disk server by using a cloud disk client, where the cloud disk client is installed on the terminal device; and
receive the cloud identifier that is sent by the cloud disk server and that corresponds to the original file.

In a possible implementation of the sixth aspect, the terminal device further includes a file deleting module. The file deleting module is specifically configured to:
obtain a deletion request; and
delete the original file on the terminal device based on the deletion request, and obtain, from the cloud disk server, a compressed file corresponding to the deleted original file.

The cloud disk servers include:
a third obtaining module, configured to obtain the cloud identifier sent by the terminal device, where the cloud identifier is an identifier that is sent by the terminal device when the terminal device detects a sharing operation instruction of the original file and that corresponds to the original file, and one cloud identifier corresponds to one original file stored in the cloud disk server; and
a second sending module, configured to send the original file corresponding to the cloud identifier to the terminal device, where the terminal device is configured to send the obtained original file corresponding to the cloud identifier to the target sharing terminal.

In a possible implementation of the sixth aspect, the cloud disk server further includes a receiving module. The receiving module is configured to:
obtain the original file uploaded by the terminal device by using the cloud disk client; and
generate the cloud identifier corresponding to the original file, and send the cloud identifier corresponding to the original file to the terminal device.

In a possible implementation of the sixth aspect, the cloud disk server further includes a storage module. The storage module is configured to:
generate an address link corresponding to the cloud identifier.

Correspondingly, the second sending module is specifically configured to:
send the original file to the terminal device based on the address link corresponding to the cloud identifier.

In a possible implementation of the sixth aspect, the storage module is further configured to:
generate the compressed file corresponding to the original file, where the terminal device is configured to: when deleting the original file on the terminal device, download, from the cloud disk server, the compressed file corresponding to the deleted original file.

According to a seventh aspect, an embodiment of this application provides a computer-readable storage medium. The computer-readable storage medium stores a computer program, and when the computer program is executed by a processor, the file sharing method according to the first aspect or the file sharing method according to the second aspect is implemented.

According to an eighth aspect, an embodiment of this application provides a computer program product. When the computer program product runs on a terminal device, the terminal device is enabled to perform the file sharing method according to the first aspect or the file sharing method according to the second aspect.

It may be understood that, for beneficial effects of the second aspect to the eighth aspect, refer to related descriptions in the first aspect. Details are not described herein again.

### BRIEF DESCRIPTION OF DRAWINGS

FIG. 1 is a schematic diagram of a file sharing system according to an embodiment of this application;
FIG. 2 is a schematic diagram of a structure of a terminal device to which a file sharing method is applicable according to an embodiment of this application;
FIG. 3 is a schematic diagram of a software architecture to which a file sharing method is applicable according to an embodiment of this application;
FIG. 4 is a schematic diagram of a file uploading process in a file sharing method according to an embodiment of this application;
FIG. 5 is a schematic diagram of an application scenario of a file sharing method according to an embodiment of this application;
FIG. 6 is a schematic diagram of a file sharing method according to an embodiment of this application;
FIG. 7 is a schematic flowchart of a file sharing method according to an embodiment of this application;
FIG. 8 to FIG. 9 are schematic diagrams of another application scenario of a file sharing method according to an embodiment of this application;
FIG. 10 to FIG. 12 are schematic diagrams of still another application scenario of a file sharing method according to an embodiment of this application;
FIG. 13 is a schematic diagram of still another application scenario of a file sharing method according to an embodiment of this application;
FIG. 14 is another schematic flowchart of a file sharing method according to an embodiment of this application;
FIG. 15 is a specific schematic flowchart of a file sharing method according to an embodiment of this application; and
FIG. 16 is a schematic diagram of a structure of a cloud disk server according to an embodiment of this application.

### DESCRIPTION OF EMBODIMENTS

In the following description, to illustrate rather than limit, specific details such as a particular system structure, and a technology are provided to make a thorough understanding of embodiments of this application. However, persons skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should also be understood that the term " and/or" used in the specification and the appended claims of this application refers to any combination and all possible combinations of one or more associated listed items, and includes these combinations.

As used in the specification and the appended claims of this application, according to the context, the term "if" may be interpreted as "when" or "once" or "in response to determining" or "in response to detecting". Similarly, according to the context, the phrase "if it is determined that" or "if (a described condition or event) is detected" may be interpreted as a meaning of "once it is determined that" or "in response to determining" or "once (a described condition or event) is detected" or "in response to detecting (a described condition or event)".

Reference to "an embodiment", "some embodiments", or the like described in the specification of this application indicates that one or more embodiments of this application include a specific feature, structure, or characteristic described with reference to those embodiments. Therefore, in this specification, statements, such as "in an embodiment", "in some embodiments", "in some other embodiments", and "in other embodiments", that appear at different places do not necessarily mean referring to a same embodiment, instead, the statements mean referring to "one or more but not all embodiments", unless otherwise specifically emphasized in other ways. Terms "include", "contain", "have", and variants of the terms all mean "include but are not limited to", unless otherwise specifically emphasized in other ways.

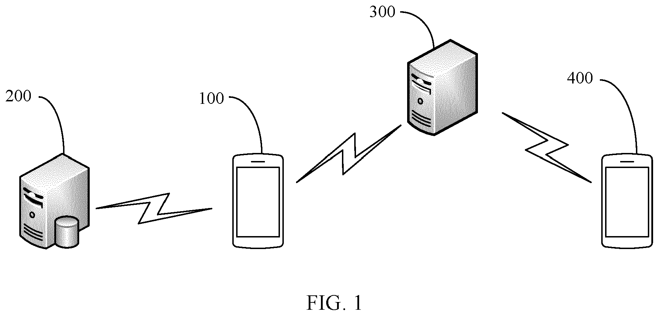

As shown in FIG. 1, a file sharing method provided in an embodiment of this application is applied to a file sharing system. The file sharing system includes a terminal device 100, a cloud disk server 200, a third-party server 300, and a target sharing terminal 400. The terminal device 100 is communicatively connected to the cloud disk server 200. The terminal device 100 uploads an original file to the cloud disk server 200. The cloud disk server 200 generates a cloud identifier corresponding to the original file, and sends the cloud identifier to the terminal device 100. When the original file is deleted, the terminal device retains the cloud identifier corresponding to the original file. When an original file that has been deleted from the terminal device 100 but is still stored in the cloud disk server 200 needs to be shared, the corresponding original file is downloaded from the cloud disk server 200 based on a cloud identifier that corresponds to the original file and is retained on the terminal device 100, and the original file is sent to the target sharing terminal 400 by using the third-party server 300, to implement file sharing. The original file may be an image, a video, a document, or the like.

Both the terminal device 100 and the target sharing terminal 400 in embodiments of this application may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. Specific types of the terminal device and the target sharing terminal are not limited in embodiments of this application.

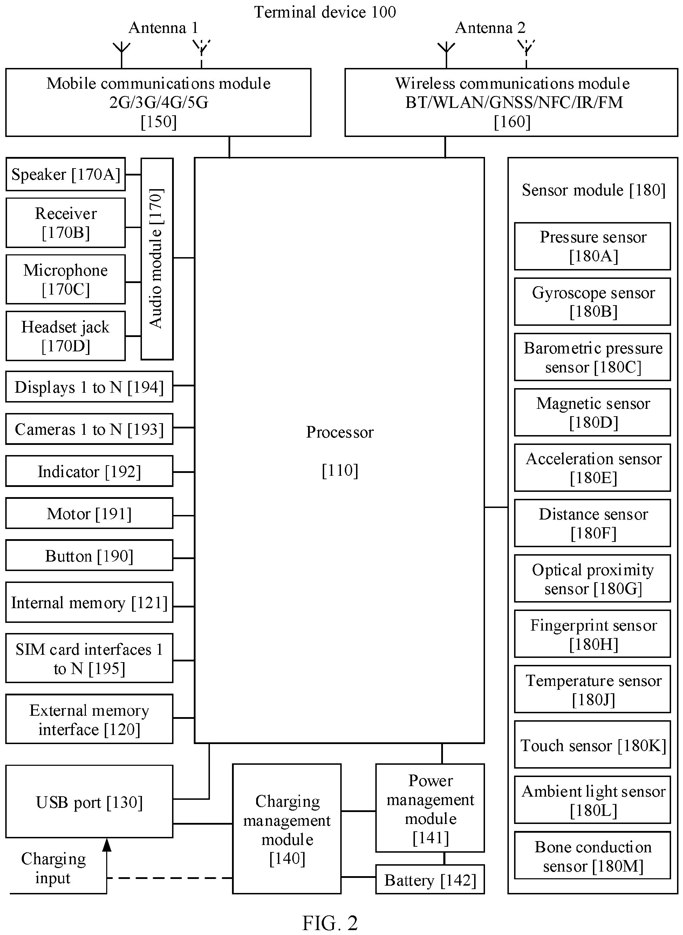

For ease of understanding, a terminal device in embodiments of this application is first described. FIG. 2 is a schematic diagram of a structure of a terminal device 100 according to an embodiment of this application.

The terminal device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that, a structure illustrated in this embodiment of this application does not constitute a specific limitation on the terminal device 100. In some other embodiments of this application, the terminal device 100 may include more or fewer parts than those shown in the figure, or combine some parts, or split some parts, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through an I2C interface, so that the processor 110 communicates with the touch sensor 180K through the I2C bus interface to implement a touch function of the terminal device 100.

The I2S interface may be used to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communications module 160 through a PCM bus interface. In some embodiments, the audio module 170 may alternatively transmit an audio signal to the wireless communications module 160 through the PCM interface, to implement a function of answering a call through a Bluetooth headset. Both the I2S interface and the PCM interface may be used to perform the audio communication.

The UART interface is a universal serial data bus, and is used to perform asynchronous communication. The bus may be a two-way communications bus. The bus converts to-be-transmitted data between serial communication and parallel communication. In some embodiments, the UART interface is usually used to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music through the Bluetooth headset.

The MIPI interface may be used to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the terminal device 100. The processor 110 communicates with the display 194 through the DSI interface, to implement a display function of the terminal device 100.

The GPIO interface may be configured by using software. The GPIO interface may be configured as a control signal or a data signal. In some embodiments, the GPIO interface may be used to connect the processor 110 to the camera 193, the display 194, the wireless communications module 160, the audio module 170, the sensor module 180, or the like. The GPIO interface may alternatively be configured as an I2C interface, an I2S interface, a UART interface, an MIPI interface, or the like.

The USB port 130 is an interface that complies with a USB standard specification, and may be specifically a mini USB port, a micro USB port, a USB Type-C port, or the like. The USB port 130 may be used to connect to the charger to charge the terminal device 100, or may be used to transmit data between the terminal device 100 and a peripheral device, or may be used to connect to a headset, to play audio through the headset. The interface may alternatively be used to connect to another terminal device, for example, an AR device.

It can be understood that an interface connection relationship between the modules illustrated in this embodiment of this application is merely an example for description, and does not constitute a limitation on the structure of the terminal device 100. In some other embodiments of this application, the terminal device 100 may alternatively use different interface connection manners in the foregoing embodiments or a combination of a plurality of interface connection manners.

The charging management module 140 is configured to receive charging input from the charger. The charger may be a wireless charger or a wired charger. In some embodiments of wired charging, the charging management module 140 may receive charging input of a wired charger through the USB port 130. In some embodiments of wireless charging, the charging management module 140 may receive wireless charging input by using a wireless charging coil of the terminal device 100. When charging the battery 142, the charging management module 140 may further supply power to the terminal device by using the power management module 141.

The power management module 141 is configured to connect to the battery 142, the charging management module 140, and the processor 110. The power management module 141 receives input from the battery 142 and/or the charging management module 140, and supplies power to the processor 110, the internal memory 121, the display 194, the camera 193, the wireless communications module 160, and the like. The power management module 141 may be further configured to monitor parameters such as a battery capacity, a battery cycle count, and a battery state of health (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the terminal device 100 may be configured to cover one or more communications frequency bands. Different antennas may be further multiplexed, to improve antenna utilization. For example, the antenna 1 may be multiplexed as a diversity antenna of a wireless local area network. In some other embodiments, an antenna may be used in combination with a tuning switch.

The mobile communications module 150 may provide a wireless communications solution applied to the terminal device 100, including 2G, 3G, 4G, 5G, or the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least some function modules in the mobile communications module 150 may be disposed in the processor 110. In some embodiments, at least some function modules in the mobile communications module 150 may be disposed in a same device as at least some modules in the processor 110.

The modem processor may include a modulator and a demodulator. The modulator is configured to modulate a to-be-sent low-frequency baseband signal into a medium- or high-frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transmits a processed signal to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communications module 150 or another function module.

The wireless communications module 160 may provide a wireless communication solution that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the terminal device 100. The wireless communications module 160 may be one or more components integrating at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave for radiation through the antenna 2.

In some embodiments, the antenna 1 of the terminal device 100 is coupled to the mobile communications module 150, and the antenna 2 thereof is coupled to the wireless communications module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or satellite based augmentation systems (satellite based augmentation systems, SBAS).

The terminal device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the terminal device 100 may include one or N displays 194, where N is a positive integer greater than 1.

The terminal device 100 may implement an image shooting function by using the ISP, the camera 193, the video codec, the GPU, the display 194, the application processor, and the like.

The ISP may be configured to process data fed back by the camera 193. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 may be configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency, the digital signal processor is configured to perform Fourier transform on frequency energy.

The video codec is configured to compress or decompress a digital video. The terminal device 100 may support one or more types of video codecs. In this way, the terminal device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the terminal device 100, for example, image recognition, facial recognition, speech recognition, and text understanding, can be implemented by using the NPU.

The external memory interface 120 may be configured to connect to an external memory card, for example, a micro SD card, to extend a storage capability of the terminal device 100. The external memory card communicates with the processor 110 through the external memory interface 120, to implement a data storage function. For example, files such as music and a video are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data or a phone book) created in a process of using the terminal device 100. In addition, the internal memory 121 may include a high-speed random access memory, or may include a nonvolatile memory, for example, at least one magnetic disk storage device, a flash memory, or a universal flash storage (universal flash storage, UFS). The processor 110 performs various function applications and data processing of the terminal device 100 by running the instructions stored in the internal memory 121 and/or the instructions stored in the memory disposed in the processor.

The terminal device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The terminal device 100 may be used to listen to music or answer a hands-free call through the speaker 170A.

The receiver 170B, also referred to as an "earpiece", is configured to convert an audio electrical signal into a sound signal. When a call is answered or voice information is received through the terminal device 100, the receiver 170B may be put close to a human ear to listen to a voice.

The microphone 170C, also referred to as "mike" or "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal device 100. In some other embodiments, two microphones 170C may be disposed in the terminal device 100, to collect a sound signal and further implement a noise reduction function. In some other embodiments, three, four, or more microphones 170C may alternatively be disposed in the terminal device 100, to collect a sound signal, implement noise reduction, and identify a sound source, to implement a directional recording function and the like.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 100 determines pressure strength based on a capacitance change. When a touch operation is performed on the display 194, the terminal device 100 detects strength of the touch operation based on the pressure sensor 180A. The terminal device 100 may further calculate a touch position based on a detection signal of the pressure sensor 180A. In some embodiments, touch operations that are performed at a same touch position but have different touch operation strength may correspond to different operation instructions. For example, when a touch operation whose touch operation strength is less than a first pressure threshold is performed on an application icon "Messages", an instruction for viewing an SMS message is performed. When a touch operation whose touch operation strength is greater than or equal to the first pressure threshold is performed on the application icon "Messages", an instruction for creating a new SMS message is performed.

The gyroscope sensor 180B may be configured to determine a motion posture of the terminal device 100. In some embodiments, angular velocities of the terminal device 100 around three axes (namely, x, y, and z axes) may be determined by using the gyroscope sensor 180B. The gyroscope sensor 180B may be configured to implement image stabilization during image shooting. For example, when the shutter is pressed, the gyroscope sensor 180B detects an angle at which the terminal device 100 jitters, calculates, based on the angle, a distance for which a lens module needs to compensate, and allows the lens to cancel the jitter of the terminal device 100 through reverse motion, to implement image stabilization. The gyroscope sensor 180B may also be used in a navigation scenario and a motion sensing game scenario.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall sensor. The terminal device 100 may detect opening and closing of a flip cover by using the magnetic sensor 180D. In some embodiments, when the terminal device 100 is a flip phone, the terminal device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the terminal device 100. A magnitude and a direction of gravity may be detected when the terminal device 100 is stationary. The acceleration sensor 180E may be further configured to identify a posture of the terminal device, and is used in an application such as switching between a landscape mode and a portrait mode or a pedometer.

The distance sensor 180F is configured to measure a distance. The terminal device 100 may measure a distance by using infrared light or a laser. In some embodiments, in an image shooting scenario, the terminal device 100 may measure a distance by using the distance sensor 180F, to implement fast focusing.

The optical proximity sensor 180G may include, for example, a light-emitting diode (LED) and an optical detector such as a photodiode. The light-emitting diode may be an infrared light-emitting diode. The terminal device 100 emits infrared light outward by using the light-emitting diode. The terminal device 100 detects infrared reflected light from a nearby object by using the photodiode. When sufficient reflected light is detected, the terminal device 100 may determine that there is an object near the terminal device 100. When insufficient reflected light is detected, the terminal device 100 may determine that there is no object near the terminal device 100. The terminal device 100 may detect, by using the optical proximity sensor 180G, that the user holds the terminal device 100 close to an ear for a call, to automatically turn off a screen for power saving. The optical proximity sensor 180G may also be used in a flip cover mode or a pocket mode to automatically perform screen unlocking or locking.

The ambient light sensor 180L is configured to sense ambient light brightness. The terminal device 100 may adaptively adjust brightness of the display 194 based on the sensed ambient light brightness. The ambient light sensor 180L may also be configured to automatically adjust white balance during image shooting. The ambient light sensor 180L may further cooperate with the optical proximity sensor 180G to detect whether the terminal device 100 is in a pocket, to prevent accidental touch.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy by using the temperature detected by the temperature sensor 180J. For example, when the temperature reported by the temperature sensor 180J exceeds a threshold, the terminal device 100 reduces performance of a processor located near the temperature sensor 180J, to reduce power consumption and implement heat protection. In some other embodiments, when the temperature is lower than another threshold, the terminal device 100 heats the battery 142, to avoid abnormal shutdown of the terminal device 100 caused by a low temperature. In some other embodiments, when the temperature is lower than still another threshold, the terminal device 100 boosts an output voltage of the battery 142, to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of a touch event. Visual output related to the touch operation may be provided through the display 194. In some other embodiments, the touch sensor 180K may alternatively be disposed on a surface of the terminal device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in a headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal device 100 may receive button input, and generate button signal input related to a user setting and function control of the terminal device 100.

The motor 191 may generate a vibration prompt. The motor 191 may be configured to provide an incoming call vibration prompt and a touch vibration feedback. For example, touch operations performed on different applications (for example, a photographing application and an audio playing application) may correspond to different vibration feedback effects. The motor 191 may also correspond to different vibration feedback effects for touch operations performed on different areas of the display 194. Different application scenarios (for example, time reminding, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The terminal device 100 interacts with a network through the SIM card, to implement functions such as calling and data communication. In some embodiments, the terminal device 100 uses an eSIM, namely, an embedded SIM card. The eSIM card may be embedded in the terminal device 100, and cannot be separated from the terminal device 100.

A software system of the terminal device 100 may use a layered architecture, an event-driven architecture, a microkernel architecture, a microservice architecture, or a cloud architecture. In embodiments of the present invention, an Android system with a layered architecture is used as an example to describe a software structure of the terminal device 100.

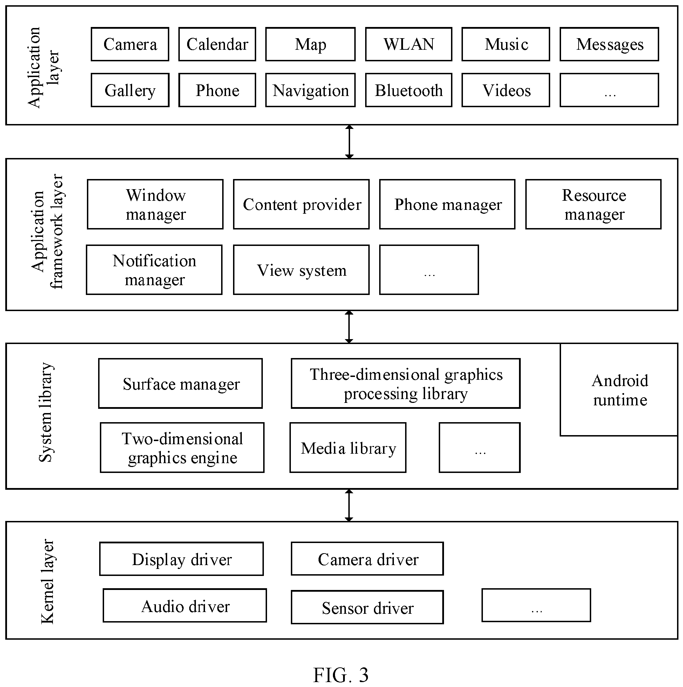

FIG. 3 is a block diagram of a software structure of a terminal device 100 according to an embodiment of the present invention.

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 3, the application packages may include applications such as Camera, Gallery, Calendar, Phone, Map, Navigation, WLAN, Bluetooth, Music, Videos, and Messages, and third-party applications such as WeChat, QQ, DingTalk, and Taobao.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and answered, a browsing history and bookmarks, a phone book, and the like.

The view system includes visual controls such as a control for displaying text and a control for displaying an image. The view system may be configured to construct an application. A display interface may include one or more views. For example, a display interface including an SMS notification icon may include a text display view and an image display view.

The phone manager is configured to provide a communication function of the terminal device 100, for example, management of call statuses (including answering, declining, and the like).

The resource manager provides various resources such as a localized character string, an icon, an image, a layout file, and a video file for an application.

The notification manager enables an application to display notification information in a status bar, and may be configured to convey a notification type message. The displayed notification information may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, a prompt tone is produced, the terminal device vibrates, or an indicator light blinks.

The Android runtime includes a kernel library and a virtual machine. The Android runtime is responsible for scheduling and management of the Android system.

The kernel library includes two parts: a function that needs to be invoked in java language and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

With reference to the file sharing system shown in FIG. 1, the following describes a file sharing method provided in an embodiment of this application.

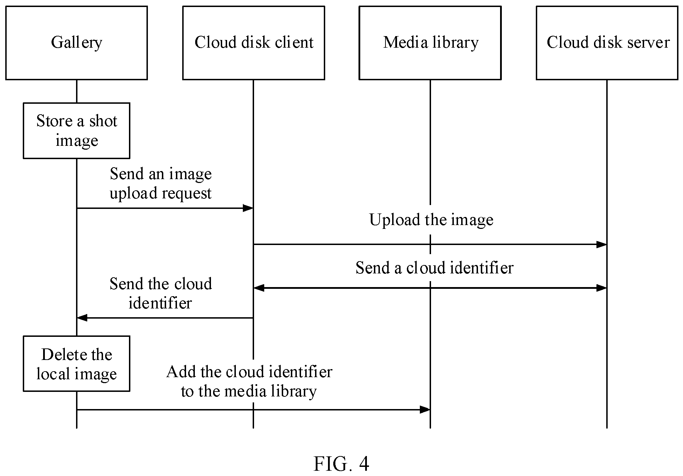

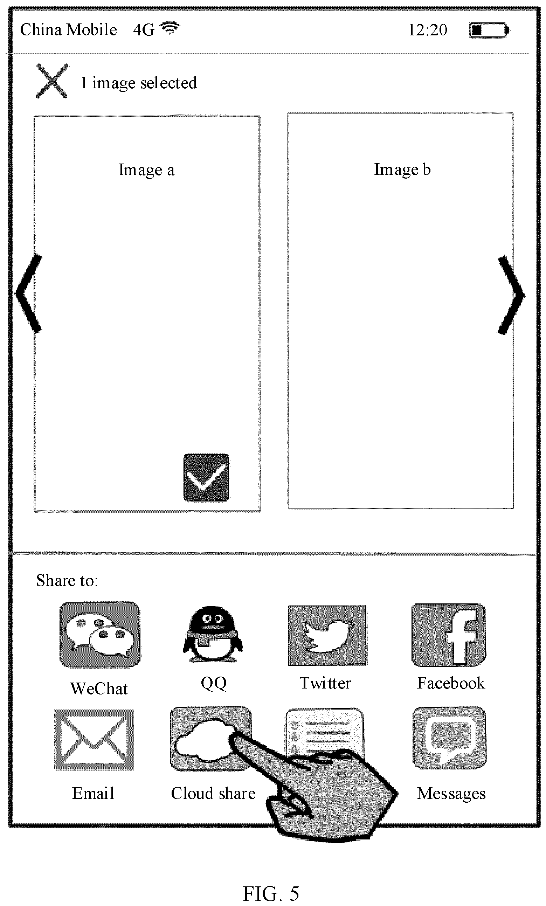

First, an example in which a file is an image is used to describe a file storage process in the file sharing method. As shown in FIG. 4, after a user performs a photographing action to obtain a corresponding image, the image is stored in a gallery of a terminal device, and the terminal device generates a local identifier corresponding to the stored image. The local identifier is an identifier for identifying a storage record of the image on the terminal device, and may be a name or a number of the image, for example, 001, 002, or 003. One local identifier corresponds to a storage record of one file, and the storage record further includes a storage path of an image. When an image needs to be uploaded to a cloud disk server, a local identifier corresponding to the image to be uploaded is selected from the gallery. A cloud disk client obtains the corresponding image based on a storage record corresponding to the local identifier and a storage path in the storage record, and uploads the obtained image to the cloud disk server. For example, as shown in FIG. 5, in response to a touch operation of the user on an "image a", the terminal device selects the "image a", that is, selects a local identifier corresponding to the "image a". If the terminal device further detects a touch operation of the user on an application "Cloud Sharing", the cloud disk client obtains a storage path corresponding to the "image a" based on a storage record corresponding to the local identifier, and uploads the image corresponding to the storage path to the cloud disk server. Still referring to FIG. 4, after the image is successfully uploaded, the cloud disk server stores the uploaded image, and the uploaded image is used as an original image stored in the cloud disk server. The cloud disk server generates a cloud identifier corresponding to the uploaded image, generates an address link based on the storage path of the image, and associates the cloud identifier with the address link. The cloud identifier is an identifier for identifying the storage record of the image on the cloud disk server, and is different from the local identifier. For example, the cloud identifier may be y01, y02, y03, or the like. In a possible implementation, one cloud identifier may correspond to a plurality of images stored in the terminal device. For example, if the cloud disk server detects that the terminal device uploads a plurality of images at the same time, the cloud disk server generates a cloud identifier corresponding to the plurality of images, generates a plurality of address links based on storage paths of the plurality of images, and associates the cloud identifier with the plurality of address links.

After generating the cloud identifier, the cloud disk server sends the cloud identifier to the cloud disk client. The terminal device stores the cloud identifier in the gallery, and reminds the user that the images are successfully uploaded. The cloud identifier is associated with the corresponding original images on the terminal device.

In a possible implementation, after detecting that the images are successfully uploaded, the terminal device deletes the original images on the terminal device, adds the cloud identifier to a media library, retains local identifiers associated with the original images, and associates the cloud identifier with the local identifiers. In another possible implementation, when detecting that the user sends an operation instruction for deleting an image, the terminal device deletes the original image stored in the gallery, adds a cloud identifier to the media library, retains a local identifier associated with the original image, and associates the cloud identifier with the local identifier.

In a possible implementation, after obtaining the original image uploaded by the terminal device, the cloud disk server generates a compressed file, namely, a thumbnail, corresponding to the original image. After deleting the original image stored in the gallery, the terminal device downloads, from the cloud disk server, the thumbnail corresponding to the deleted original image, where storage space of the thumbnail is less than storage space of the corresponding original image. After downloading the thumbnail, the terminal device stores the thumbnail in a hidden directory, and associates a storage path corresponding to the thumbnail in the hidden directory with a local identifier. Therefore, both the thumbnail and the original image are associated with a unique storage record in the media library, and each storage record includes a local identifier, a storage path, and a cloud identifier that correspond to the image. For example, a media metadata table is maintained in the media library, fields in the media metadata table include a local identifier, a storage path, and a cloud identifier, and each row of storage record in the media metadata table is associated with one image. For an image that has been deleted from the terminal device and is stored in the cloud disk server, a storage path is a storage path of a compressed file, and a cloud identifier is in a one-to-one correspondence with an original file on the cloud disk server. For an image that is stored only in the terminal device and is not uploaded to the cloud disk server, a storage path is a storage path of the original image on the terminal device, and a cloud identifier is empty. For an image that has been uploaded to the cloud disk server and is not deleted from the terminal device, a storage path is a storage path of the original image on the terminal device, and a cloud identifier is in a one-to-one correspondence with an original file on the cloud disk server.

In a possible implementation, the terminal device separately displays, in different paths, an image stored in the terminal device and an image that is stored in the cloud disk server and has been deleted from the terminal device. For example, the user accesses, by enabling a "local image" folder in the media library, an image stored in the terminal device, and accesses, by enabling a "cloud image" folder in the media library, an image that is stored in the cloud disk server and has been deleted from the terminal device, to facilitate viewing by the user. It should be noted that the image stored in the terminal device and the image that is stored in the cloud disk server and has been deleted from the terminal device may alternatively be displayed in a same path.

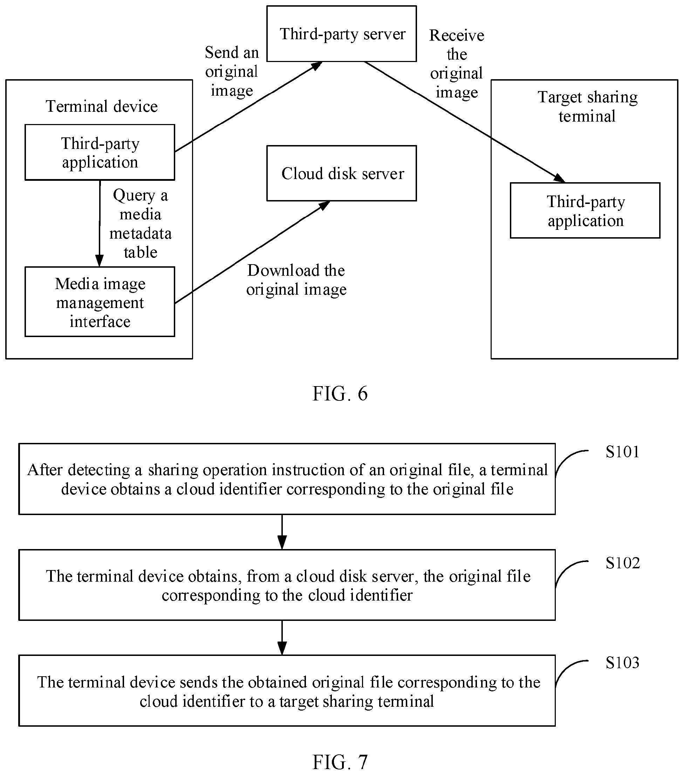

A file sharing method provided in an embodiment of this application is shown in FIG. 6. A third-party application and a media library are installed on a terminal device, and the third-party application is also installed on a target terminal. The media library includes a media metadata table and a media image management interface. The media metadata table is used to store a storage record corresponding to an original file. The media image management interface is used to manage a file stored in the terminal device and a file stored in a cloud disk server. The terminal device implements, through the media image management interface, a read/write operation on the file stored in the cloud disk server. In this embodiment of this application, the third-party application queries a storage record in the media metadata table based on a sharing operation instruction of a user through the media image management interface, and selects a record corresponding to the sharing operation instruction from the storage record. The media image management interface reads the record selected by the user, downloads, from the cloud disk server, an original image corresponding to the record selected by the user, and after the downloading succeeds, saves the original image to the terminal device and sends the original image to the third-party application. The third-party application then sends the original image to the target sharing terminal by using the third-party server, and the third-party application on the target sharing terminal receives and displays the original image.

The following describes in detail the file sharing method provided in this embodiment of this application. FIG. 7 is a schematic flowchart of the file sharing method according to this embodiment of this application. The method is performed by a terminal device 100. The method includes the following steps.

S101: After detecting the sharing operation instruction of the original file, the terminal device obtains a cloud identifier corresponding to the original file, where one cloud identifier corresponds to at least one original file stored in the cloud disk server.

Specifically, when detecting the operation instruction of the user for sharing the original file, the terminal device obtains the cloud identifier from the storage record corresponding to the original file. The original file may be an image, a video, or a document, and the original file is stored in the terminal device or a cloud server.

In a possible implementation, the terminal device obtains the cloud identifier from the media library. Specifically, the storage record corresponding to the original file is stored in the media metadata table of the media library, and a field corresponding to each storage record includes a local identifier, a storage path, and a cloud identifier. When detecting the operation instruction of the user for sharing the original file, the terminal device determines, based on the operation instruction of sharing the original file, a local identifier corresponding to a to-be-shared file, searches the media metadata table for a storage record corresponding to the local identifier through the media image management interface, and determines, based on the storage record, whether the original file corresponding to the local identifier exists on the terminal device. For example, if a storage path corresponding to the local identifier is a path of a gallery on the terminal device, the corresponding original file is stored in the terminal device; or if the storage path corresponding to the local identifier is a path of a compressed file, the corresponding original file is not stored in the terminal device. If no corresponding original file exists on the terminal device, the terminal device searches the media metadata table for the cloud identifier corresponding to the original file. For example, it is determined whether a record corresponding to a cloud identifier field in the storage record corresponding to the original file is empty. If the record is not empty, it indicates that the cloud identifier corresponding to the original file exists in the media metadata table, and the cloud identifier is obtained.

In a possible implementation, the terminal device obtains the sharing operation instruction of the original file by using the third-party application installed on the terminal device, and obtains, based on the sharing operation instruction of the original file, the cloud identifier corresponding to the original file. The third-party application may be WeChat, QQ, DingTalk, Taobao, or the like.

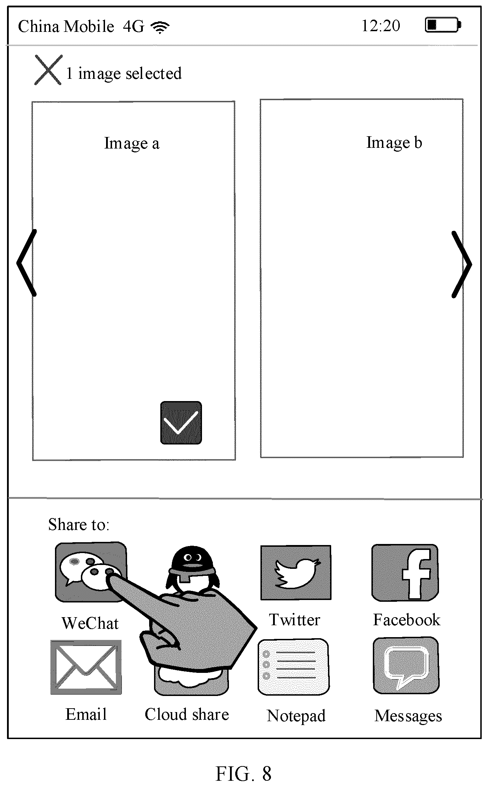

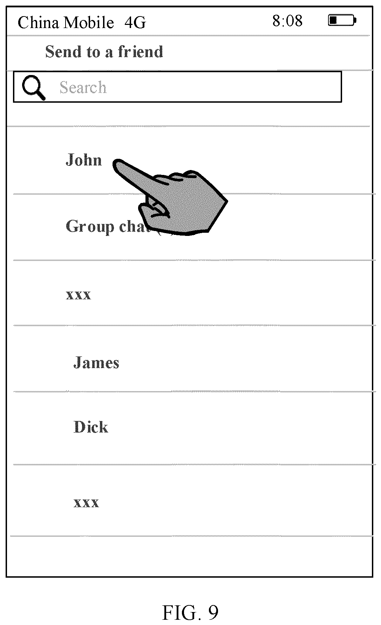

For example, the third-party application is WeChat. In a scenario, as shown in FIG. 8, when detecting an operation of enabling the media library and touching an "image a" by the user, the terminal device selects the "image a", that is, selects a local identifier corresponding to the "image a". When further detecting an operation of touching "WeChat", the terminal device jumps to a WeChat contact interface. As shown in FIG. 9, when detecting that the user touches a contact on the contact interface, the terminal device responds to an operation instruction of the user for sharing the "image a". First, a preset media image management interface is used to check whether the original image corresponding to the local identifier exists on the terminal device. If the original image corresponding to the local identifier does not exist on the terminal device, the media metadata table in the media library is searched to check whether a cloud identifier corresponding to the local identifier, namely, a cloud identifier of the "image a", exists. If the cloud identifier corresponding to the local identifier exists in the media metadata table, the cloud identifier is obtained.

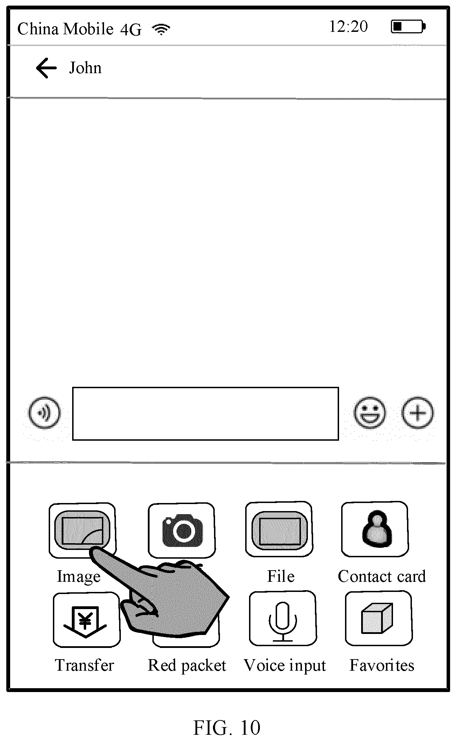

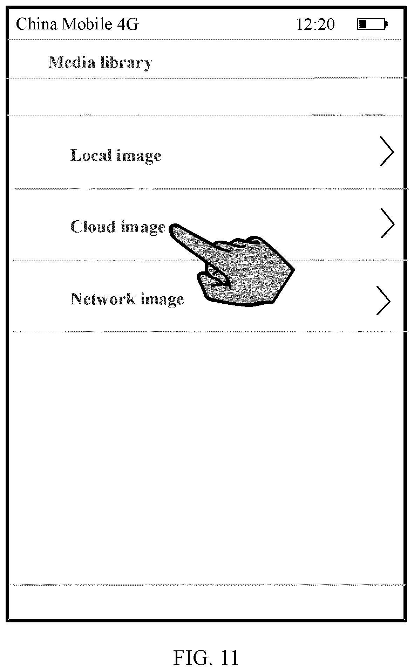

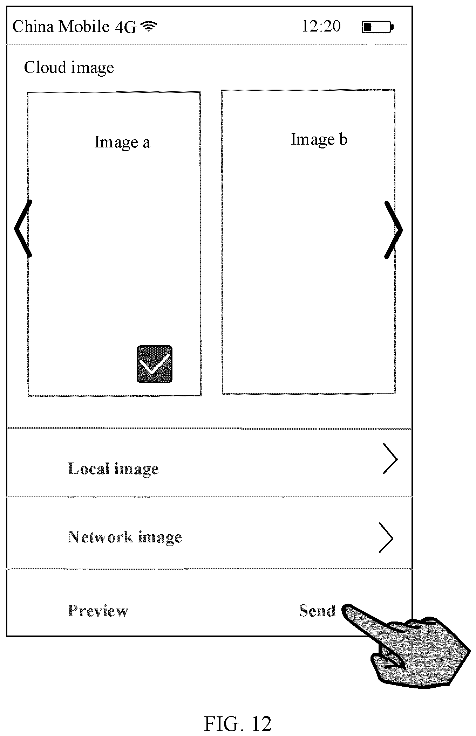

In another scenario, as shown in FIG. 10, after the user enables WeChat and selects a contact, the terminal device enables the media library after detecting an operation of touching an image sending option by the user. As shown in FIG. 11, the user may enable a local image folder in the media library to select an image stored in the terminal device, or may enable a cloud image folder to select an image that has been deleted from the terminal device and stored in the cloud disk server. As shown in FIG. 12, after detecting that the user touches the "cloud image", the terminal device enables the cloud image folder. When further detecting the operation of touching the "image a", the terminal device selects the "image a", that is, selects the local identifier corresponding to the "image a". When further detecting an operation of touching "Send", the terminal device responds to the operation instruction of the user for sharing the "image a", and searches, through the media image management interface, the media metadata table in the media library for the cloud identifier corresponding to the local identifier, namely, the cloud identifier of the "image a". If the cloud identifier corresponding to the local identifier exists in the media metadata table, the cloud identifier is obtained.

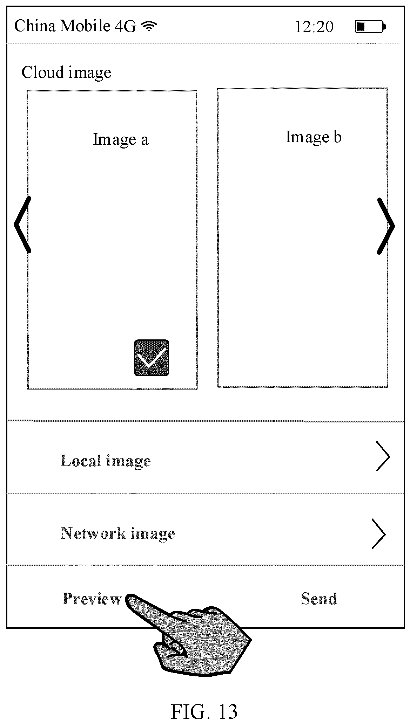

For the image that has been deleted from the terminal device and stored in the cloud disk server, the user may preview the image on the terminal device. For example, as shown in FIG. 13, the user enables the cloud image folder, and selects the "image a". When the terminal device detects an operation of touching "Preview", a thumbnail of the "image a" is enabled based on a path of the thumbnail of the "image a", to implement preview.

S102: The terminal device obtains, from the cloud disk server, the original file corresponding to the cloud identifier.

Specifically, the terminal device invokes a cloud disk client through the media image management interface. The cloud disk client generates a download request based on the cloud identifier, sends the download request to the cloud disk server, downloads the original file from the cloud disk server, and stores the original file on the terminal device through the preset media image management interface.

S103: The terminal device sends the obtained original file corresponding to the cloud identifier to the target sharing terminal.

In a possible implementation, after the original file is stored in the terminal device, the third-party application obtains the original file and sends the original file to the third-party server, and the third-party server sends the original file to the target sharing terminal. The target sharing terminal may obtain the original file by installing the third-party application, for example, WeChat, on the target sharing terminal, to implement file sharing.

In a possible implementation, after receiving an indication that the file is sent successfully by the third-party server, the terminal device deletes the original file downloaded from the cloud disk server, to reduce space occupied by the file.

It should be noted that, in another possible implementation, if the terminal device finds, through the media image management interface, that the original file is stored in the terminal device, for example, searches the media metadata table in the media library through the media image management interface, and a storage path in the media metadata table is a storage path of the original file on the terminal device, the terminal device obtains the original file based on the storage path of the original file, and sends the original file to the third-party server by using the third-party application.

In a possible implementation, for a file that has been deleted from the terminal device but is still stored in the cloud disk server, the terminal device may perform, based on a user operation, an operation of sending the original file or an operation of sending the compressed file. For example, after the user selects an image, if an operation of the user selecting "Send an original image" on the terminal device is detected, a cloud identifier is obtained based on a local identifier corresponding to the image selected by the user, an original file sent by the cloud disk server is obtained based on the cloud identifier, and then the original file is sent to the third-party server; or if an operation of the user selecting" Send a thumbnail" on the terminal device is detected, a storage path of the thumbnail on the terminal device is obtained based on the local identifier corresponding to the image selected by the user, and the thumbnail is sent to the third-party server.

In the foregoing embodiment, when detecting a sharing operation instruction of a file, the terminal device obtains a cloud identifier, sends the cloud identifier to the cloud disk server, to obtain an original file that is sent by the cloud disk server and corresponds to the cloud identifier, and sends the original file to the target sharing terminal. Because the target sharing terminal obtains the original file instead of an address link, the target sharing terminal does not need to adapt to the address link. This improves universality and user experience.

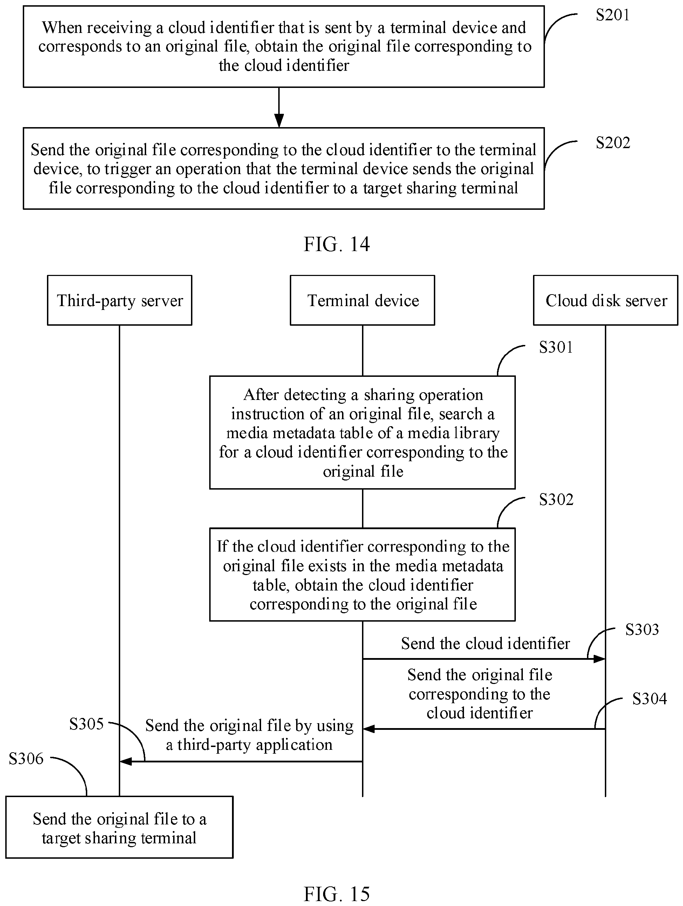

FIG. 14 is another schematic flowchart of a file sharing method according to an embodiment of this application. The method is performed by a cloud disk server 200. As shown in FIG. 14, the method includes the following steps.

S201: When receiving a cloud identifier that is sent by a terminal device and corresponds to an original file, the cloud disk server obtains the original file corresponding to the cloud identifier, where the cloud identifier is triggered after the terminal device detects a sharing operation instruction of the original file, and one cloud identifier corresponds to at least one original file stored in the cloud disk server.

Specifically, the cloud disk server maintains a storage list. Fields in the storage list include a cloud identifier and an address link. Each record in the storage list corresponds to at least one original file, that is, one cloud identifier corresponds to at least one original file. After detecting the sharing operation instruction of the original file, the terminal device sends the cloud identifier corresponding to the original file to the cloud disk server. When receiving the cloud identifier, the cloud disk server searches the storage list for a record corresponding to the cloud identifier, obtains, based on the record, an address link corresponding to the cloud identifier, and obtains the corresponding original file based on the address link.

S202: The cloud disk server sends the original file corresponding to the cloud identifier to the terminal device, to trigger an operation that the terminal device sends the original file corresponding to the cloud identifier to a target sharing terminal.

Specifically, the cloud disk server sends the original file corresponding to the cloud identifier to a cloud disk client on the terminal device, and the terminal device stores the original file in a media library by using the cloud disk client, so that a third-party application sends the original file to the target sharing terminal.

In the foregoing embodiment, the original file is stored in the cloud disk server. When obtaining the cloud identifier sent by the terminal device, the cloud disk server obtains the original file corresponding to the cloud identifier, and sends the original file corresponding to the cloud identifier to the terminal device, so that the terminal device sends the original file to the target sharing terminal to implement file sharing. Because the original file received by the target sharing terminal is not the address link, the target sharing terminal does not need to adapt to the address link. This improves user experience.

FIG. 15 is a specific schematic flowchart of a file sharing method according to an embodiment of this application. As shown in FIG. 15, the method includes the following steps.

S301: After detecting a sharing operation instruction of an original file, a terminal device searches a media metadata table of a media library of the terminal device for a cloud identifier corresponding to the original file.

For example, if the terminal device detects that a user enables a third-party application and further detects an operation that the user adds an image to the third-party application, the terminal device enables the media library through a media image management interface. When detecting that the user selects a file and further detecting an operation of sending the file, the terminal device searches the media metadata table in the media library for a cloud identifier corresponding to the selected file.

S302: If the cloud identifier corresponding to the original file exists in the media metadata table, the terminal device obtains the cloud identifier corresponding to the original file.

Specifically, if the cloud identifier corresponding to the original file exists in the media metadata table, it indicates that the original file is stored in a cloud disk server, and the terminal device obtains the cloud identifier.

S303: The terminal device sends the cloud identifier to the cloud disk server.

Specifically, the terminal device invokes a cloud disk client, and the cloud disk client generates a file download request based on the cloud identifier, and sends the file download request to the cloud disk server.

S304: The cloud disk server sends the original file corresponding to the cloud identifier to the terminal device.

Specifically, the original file stored in the cloud disk server corresponds to the cloud identifier, and one cloud identifier corresponds to at least one original file. After obtaining the download request, the cloud disk server parses the corresponding cloud identifier, obtains an address link corresponding to the cloud identifier, obtains the original file based on the address link, and sends the obtained original file to the cloud disk client on the terminal device.

S305: The terminal device sends the original file corresponding to the cloud identifier to a third-party server by using the third-party application.

S306: The third-party server sends the original file to a target sharing terminal.

Specifically, the third-party application is installed on the target sharing terminal, and the target sharing terminal sends the download request to the third-party server by using the third-party application, to obtain the original file.

In the foregoing embodiment, when detecting a sharing operation instruction of a file, the terminal device obtains a cloud identifier, sends the cloud identifier to the cloud disk server, to obtain an original file that is sent by the cloud disk server and corresponds to the cloud identifier, and sends the original file to the third-party server by using the third-party application. Another terminal device may download the original file from the third-party server by using the third-party application, that is, a file stored in the cloud disk server can be shared without an address link, so that the third-party application does not need to adapt to the address link. This improves universality and user experience.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

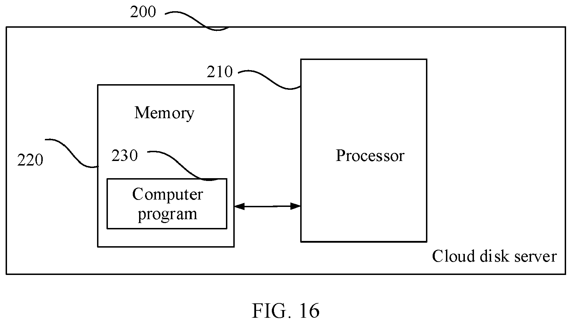

Corresponding to the file sharing method in the foregoing embodiments, FIG. 16 shows a block diagram of a structure of a file sharing apparatus according to an embodiment of this application. For ease of description, only a part related to embodiments of this application is shown.

FIG. 16 is a schematic diagram of a structure of a cloud disk server 200 according to an embodiment of this application. As shown in FIG. 16, the cloud disk server 200 in this embodiment includes: at least one processor 210 (only one processor shown in FIG. 16), a memory 220, and a computer program 230 that is stored in the memory 220 and that can run on the at least one processor 210. When executing the computer program 230, the processor 210 implements the steps performed by the cloud disk server in the foregoing embodiments of the file sharing methods.

Persons skilled in the art can understand that FIG. 16 is merely an example of the cloud disk server, and does not constitute a limitation on the cloud disk server. The cloud disk server may include more or fewer components than those shown in the figure, or some components may be combined, or different components may be included. For example, the cloud disk server may further include an input/output device, a network access device, and the like.

The processor 210 may be a central processing unit (Central Processing Unit, CPU). The processor 210 may alternatively be another general-purpose processor, a digital signal processor (Digital Signal Processor, DSP), an application-specific integrated circuit (Application Specific Integrated Circuit, ASIC), a field-programmable gate array (Field-Programmable Gate Array, FPGA) or another programmable logic device, a discrete gate or a transistor logic device, or a discrete hardware component. The general-purpose processor may be a microprocessor, or the processor may be any conventional processor or the like.

In some embodiments, the memory 220 may be an internal storage unit of the cloud disk server, for example, a hard disk or a memory of the cloud disk server. In some other embodiments, the memory 220 may be alternatively an external storage device of the cloud disk server, for example, a plug-in hard disk, a smart media card (Smart Media Card, SMC), a secure digital (Secure Digital, SD) card, or a flash card (Flash Card) that is disposed on the cloud disk server. Further, the memory 220 may further include both an internal storage unit of the cloud disk server and an external storage device. The memory 220 is configured to store an operating system, an application, a boot loader (BootLoader), data, another program, and the like, for example, program code of the computer program. The memory 220 may further be configured to temporarily store output data or to-be-output data.

In the foregoing embodiments, descriptions of embodiments have respective focuses. For a part that is not described in detail or recorded in an embodiment, refer to related descriptions in other embodiments.

Persons skilled in the art may clearly understand that, for the purpose of convenient and brief description, division into the foregoing function units or modules is merely used as an example for description. In an actual application, the foregoing functions may be allocated to different function units or modules for implementation based on a requirement. That is, an inner structure of the apparatus is divided into different function units or modules to implement all or some of the functions described above. Function units and modules in embodiments may be integrated into one processing unit, or each of the units may exist alone physically, or two or more units may be integrated into one unit. The integrated unit may be implemented in a form of hardware, or may be implemented in a form of a software function unit. In addition, specific names of the function units and modules are merely for ease of distinguishing between the function units and modules, but are not intended to limit the protection scope of this application. For a specific working process of the units and modules in the foregoing system, refer to a corresponding process in the foregoing method embodiments. Details are not repeatedly described herein.

When the integrated unit is implemented in the form of the software function unit and sold or used as an independent product, the integrated unit may be stored in a computer-readable storage medium. Based on such an understanding, all or some of the processes of the method in embodiments of this application may be implemented by a computer program instructing relevantevant hardware. The computer program may be stored in a computer-readable storage medium. When the computer program is executed by the processor, steps of the foregoing method embodiments may be implemented. The computer program includes computer program code. The computer program code may be in a source code form, an object code form, an executable file form, some intermediate forms, or the like. The computer-readable medium may include at least any entity or apparatus that can carry computer program code to an image shooting apparatus/terminal device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disk.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In embodiments provided in this application, it should be understood that the disclosed apparatus/network device and method may be implemented in other manners. For example, the described apparatus/network device embodiment is merely an example. For example, the module or unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A file sharing method, applied to a terminal device, wherein the file sharing method comprises:
if a sharing operation instruction of an original file is detected, obtaining a cloud identifier corresponding to the original file, wherein one cloud identifier corresponds to at least one original file stored in a cloud disk server;
obtaining, from the cloud disk server, the original file corresponding to the cloud identifier; and
sending the obtained original file corresponding to the cloud identifier to a target sharing terminal.

2. The file sharing method according to claim 1, wherein the obtaining a cloud identifier corresponding to the original file comprises:
searching a media metadata table of a media library of the terminal device for the cloud identifier corresponding to the original file; and
if the cloud identifier corresponding to the original file exists in the media metadata table, obtaining the cloud identifier corresponding to the original file.

3. The file sharing method according to claim 2, wherein the searching a media metadata table of a media library of the terminal device for the cloud identifier corresponding to the original file comprises:
if the original file does not exist on the terminal device, searching the media metadata table of the media library of the terminal device for the cloud identifier corresponding to the original file.

4. The file sharing method according to claim 2 or 3, wherein the searching a media metadata table of a media library of the terminal device for the cloud identifier corresponding to the original file comprises:
searching, by using a preset media image management interface, the media metadata table of the media library of the terminal device for the cloud identifier corresponding to the original file.

5. The file sharing method according to any one of claims 1 to 4, wherein the obtaining, from the cloud disk server, the original file corresponding to the cloud identifier comprises:
obtaining, from the cloud disk server by using the preset media image management interface, the original file corresponding to the cloud identifier.

6. The file sharing method according to any one of claims 1 to 5, wherein before the obtaining a cloud identifier corresponding to the original file, the method further comprises:
obtaining the original file;
uploading the original file to the cloud disk server by using a cloud disk client, wherein the cloud disk client is installed on the terminal device; and
receiving the cloud identifier that is sent by the cloud disk server and that corresponds to the original file.

7. The file sharing method according to claim 6, wherein after the uploading the original file to the cloud disk server by using a cloud disk client, the method further comprises:
deleting the original file on the terminal device, and obtaining, from the cloud disk server, a compressed file corresponding to the deleted original file.

8. A file sharing method, applied to a cloud disk server, wherein the file sharing method comprises:
when receiving a cloud identifier that is sent by a terminal device and corresponds to an original file, obtaining the original file corresponding to the cloud identifier, wherein the cloud identifier is triggered after the terminal device detects a sharing operation instruction of the original file, and one cloud identifier corresponds to at least one original file stored in the cloud disk server; and
sending the original file corresponding to the cloud identifier to the terminal device, to trigger an operation that the terminal device sends the original file corresponding to the cloud identifier to a target sharing terminal.

9. The file sharing method according to claim 8, wherein before the obtaining the original file corresponding to the cloud identifier, the method further comprises:
obtaining the original file uploaded by the terminal device by using a cloud disk client; and
generating the cloud identifier corresponding to the original file, and sending the cloud identifier corresponding to the original file to the terminal device.

10. The file sharing method according to claim 9, wherein after the generating the cloud identifier corresponding to the original file, the method further comprises:
generating an address link corresponding to the cloud identifier; and
correspondingly, the sending the original file corresponding to the cloud identifier to the terminal device comprises:
obtaining the corresponding original file based on the address link corresponding to the cloud identifier, and sending the original file to the terminal device.

11. The file sharing method according to claim 9, wherein after the generating the cloud identifier corresponding to the original file, the method further comprises:
generating a compressed file corresponding to the original file.

12. A terminal device, comprising a memory, a processor, and a computer program that is stored in the memory and that can be run on the processor, wherein when executing the computer program, the processor implements the file sharing method according to any one of claims 1 to 7.

13. A cloud disk server, comprising a memory, a processor, and a computer program that is stored in the memory and that can be run on the processor, wherein when executing the computer program, the processor implements the file sharing method according to any one of claims 8 to 11.

14. A file sharing system, comprising the terminal device according to claim 12 and the cloud disk server according to claim 13.

15. A computer-readable storage medium, wherein the computer-readable storage medium stores a computer program, and when the computer program is executed by a processor, the file sharing method according to any one of claims 1 to 7 or the file sharing method according to any one of claims 8 to 11 is implemented.
